**Europäisches Patentamt**

**European Patent Office**

**Office européen des brevets**

(19)

(11) Veröffentlichungsnummer : **0 344 482 B1**

# (12) EUROPÄISCHE PATENTSCHRIFT

(45) Veröffentlichungstag der Patentschrift :
25.09.91 Patentblatt 91/39

(51) Int. Cl.$^5$ : **B60T 15/22**

(21) Anmeldenummer : 89108143.2

(22) Anmeldetag : 05.05.89

(54) Anhänger-Steuerventil für druckmittelbetätigte Bremsanlagen von Nutzfahrzeugen.

(30) Priorität : 01.06.88 DE 3818743

(43) Veröffentlichungstag der Anmeldung :
06.12.89 Patentblatt 89/49

(45) Bekanntmachung des Hinweises auf die
Patenterteilung :
25.09.91 Patentblatt 91/39

(84) Benannte Vertragsstaaten :
AT DE FR GB IT NL SE

(56) Entgegenhaltungen :
DE-A- 3 526 048
DE-C- 2 246 242

(73) Patentinhaber : KNORR-BREMSE AG
Moosacher Strasse 80 Postfach 401060
W-8000 München 40 (DE)

(72) Erfinder : Fuchs, Christian
Heymannstrasse 3/IV
W-8042 Oberschleissheim (DE)
Erfinder : Tischler, Karl Heinz
Hildeboldstrasse 28/II
W-8000 München 40 (DE)

## Beschreibung

Die Erfindung betrifft ein Anhänger-Steuerventil nach dem Gattungsbegriff des Patentanspruches 1. Ein derartiges Steuerventil ist aus der DE-A-3526048 bekannt.

Bei Anhänger Steuerventilen der gattungsgemäßen Art wirkt zum Zwecke der Voreilung eine vorspannbare Federeinrichtung auf einen Steuerkolben ein, welcher von einer großen Wirkfläche auf eine kleine Wirkfläche umschaltbar ist, wodurch infolge der kleineren Wirkfläche Probleme der Hysterese über den gesamten Druckbereich auftreten können. Die zum Einstellen der Voreilung des Ventils mittels veränderlicher Vorspannung an den Federmitteln eingreifenden Einstellelemente sind verhältnismäßig kompliziert aufgebaut ; sie sind außerdem von außen frei zugängig, was Probleme des funktionssicheren Betriebes mit sich bringt.

Davon ausgehend besteht die Aufgabe der Erfindung darin, ein Anhänger-Steuerventil der gattungsgemäßen Art mit baulich einfachen Mitteln so auszugestalten, daß die Voreilung in einfacher Weise von außerhalb des Anhängersteuerventils einstellbar ist, ohne daß die Gefahr eine selbsttätigen Verstellens besteht. Es sollen optimale Flächenverhältrisse am Steuerkolben als auch am Reaktionskolben des Ventils bestehen, derart, daß ein schnelles Ansprechen ermöglicht ist und gleichzeitig Probleme der Hysterese beim Lösen, insbesondere beim Teillösen, vermieden werden können.

Zur Lösung dieser Aufgabe dienen die Merkmale nach dem Kennzeichnungsteil des Patentanspruches 1.

Das Anhänger-Steuerventil besitzt in seiner Ausgangslage jeweils konstanten Abstand zwischen Steuerventil Steuerkolben und Rückwirkkolben. Zum Einstellen der Voreilung des Ventils ist es lediglich erforderlich, die gegenüber der Feder zur Wirkung gelangende Mitnehmerhülse in ihrer Relativlage zu der die Feder abstützenden Stützplatte zu verstellen, derart, daß bei Reaktionsbewegung des Rückwirkkolbens die Mitnahme der Stützplatte und damit die Reaktionswirkung gegenüber der Feder genau bestimmbar sind. Hierbei ist es auch möglich, die Voreilung vollständig auszuschalten, wenn sich der Rückwirkkolben ohne Wirkung gegenüber der Feder an den Steuerkolben anlegen kann.

Vorteilhafte Ausgestaltungen und Weiterbildungen sind in weiteren Unteransprüchen aufgeführt.

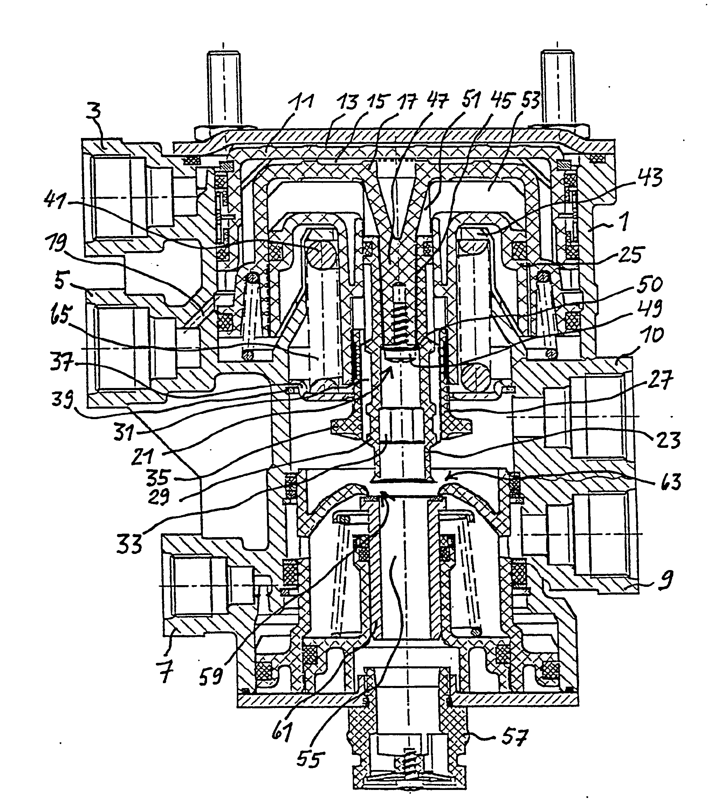

Die Erfindung ist nachfolgend anhand eines Ausführungsbeispiels unter Bezugnahme auf die beigefügte Zeichnung erläutert.

Die Zeichnung zeigt in Längsschnittansicht ein Anhänger-Steuerventil nach der Erfindung.

Das in der Zeichnung wiedergegebene Anhängersteuerventil ist für Druckluftbremsanlagen von Kraftfahrzeugen mit Anhängerbetrieb vorgesehen ;

es weist an einem Gehäuse 1 einen Anschluß 3 und einen Anschluß 5 auf, welche für einen ersten und einen zweiten Betriebsbremskreis vorgesehen sind. Ein weiterer Anschluß 7 dient zum Anschluß an den Bremskreis einer Feststellbremse. Ein Anschluß 9 ist an einen Vorratsdruck führenden Druckluftspeicher angeschlossen, von welchem in nachfolgend beschriebener Weise mittels des Ventils Druckluft in einen Anschluß 10 gelangen kann. Der Anschluß 10 ist mit mit einer zu einem Kupplungskopfführenden Anhängerbremsleitung verbunden, wobei mit Hilfe des Anhängersteuerventils voreilender Druck in diese Anhängerbremsleitung eingespeist werden soll.

Innerhalb des Gehäuses 1 ist oberhalb eines ersten Steuerkolbens 11 eine erste Steuerkammer 13 vorgesehen ; unterhalb des Steuerkolbens 11 befindet sich eine zweite Steuerkammer 15, welche an der Unterseite durch einen Steuerkolben 17 begrenzt ist. Die Steuerkammer 15 ist mittels eines Kanals 19 mit dem Anschluß 5 des zweiten Bremskreises verbunden.

Der zweite Steuerkolben 17 trägt mittels einer nachfolgend im einzelnen beschriebenen kardanischen Aufhängung 21 einen zylindrischen Fortsatz 23. Der zylindrische Fortsatz 23 ist durch einen Rückwirkkolben 25 umgeben, welcher gegenüber dem Innenumfang des zweiten Steuerkolbens 17 als auch gegenüber dem Außenumfang des Fortsatzes unter Abdichtung verschiebbar geführt ist. Am in der Darstellung unteren Ende des Rückwirkkolbens 25 ist eine Mitnehmerhülse 27 vorgesehen, welche mit dem Rückwirkkolben im Gewindeeingriff ist. Die Mitnehmerhülse 27 ist in Längsrichtung entlang des Fortsatzes 23 bewegbar, wobei vom Fortsatz 23 nach außen kragende Keile 29 in Nuten 31 der Mitnehmerhülse geführt sind. Im Inneren des Fortsatzes 23 befindet sich ein Schraubeinsatz 33, z.B. in Form eines Innensechskants, welcher in nachfolgend beschriebener Weise zur Aufnahme eines von außerhalb eingeführten Drehwerkzeuges dient, um bei Drehung des Fortsatzes 23 die drehbar mit dieser verbundene Mitnehmerhülse 27 zu verdrehen, derart, daß sich diese infolge ihres Gewindeeingriffs am drehfestgehaltenen Rückwirkkolben 25 entlang diesem in Längsrichtung bewegen läßt. Am in der Darstellung unteren Ende der Mitnehmerhülse 27 befindet sich ein auskragender Mitnehmerbund 35, welcher bei nach oben gerichteter Bewegung in Anlage mit einer Stützplatte 37 gelangt. Die Stützplatte 37 ist mittels eines Sicherungsringes 39 am Gehäuse 1 gehalten, derart, daß sie sich aus der in der Zeichnung dargestellten Lage nach oben gerichtet verschieben läßt. Die Stützplatte 37 stützt ein Ende einer Feder 41 ab, welche sich mit ihrem entgegengesetzten, oberen Ende an einem von der Innenwand des Gehäuses nach innen vorstehenden, gleichfalls als Abstützung wirkenden Steg 43 abstützt. Die Feder 41 ist demnach in der dargestellten Position zu beiden Seiten vom Gehäuse in dessen Inneren abgestützt.

Wie vorstehend erläutert ist, ist der zweite Steuerkolben 17 mittels der kardanischen Aufhängung 21 mit dem Fortsatz 23 verbunden. Hierbei umgibt das obere Ende des Fortsatzes 23 unter Bildung eines um den gesamten Innenumfang verlaufenden Spalts 45 einen in den Fortsatz sich erstreckenden Kolbenschaft 47 des Steuerkolbens 17. In das untere Ende des Kolbenschafts 47 ist eine Stellschraube 49 eingeschraubt, wobei sich eine Blattfeder 50 zwischen der Stellschraube 49 und einer Schulter am Innenumfang des Fortsatzes 23 abstützt. Am oberen Ende liegt der Fortsatz 23 an vom Steuerkolben 17 nach unten abstehenden Rippen 51 an, d.h., daß durch Anziehen der Stellschraube 49 der Fortsatz 23 und der Steuerkolben 17 gegenseitig unter Belassung des Spalts 45 verspannbar sind. Die Kammer 53 zwischen dem Steuerkolben 17 und dem Rückwirkkolben 25 ist durch den Spalt 45 und den mittig durch das Ventil sich erstreckenden Kanal 55 über den Entlüftungsstutzen 57 mit der Außenluft in Verbindung, wobei Volumenveränderungen in der Kammer 53 durch die vorbeschriebene Außenluftverbindung ausgeglichen werden.

Die Wirkungsweise des Anhängersteuerventils ist wie folgt:

Bei gelöster Bremse nehmen die Bauteile des Anhängersteuerventils die in der Zeichnung dargestellte Lage ein, in welcher der mit der Anhängerbremsleitung verbundene Anschluß mit dem Entlüftungsstutzen 57 in Verbindung steht, also entlüftet ist, da sich das Auslaßventil 59 in geöffneter Lage befindet. Wird am Zugwagen gebremst, so strömt Druckluft über die beiden Anschlüsse 3 und 5 in die beiden Steuerkammern 13 und 15 ein, mit der Folge, daß der Steuerkolben 11 infolge von gleichen Druckbedingungen auf beiden Seiten stehen bleibt, während sich der zweite Steuerkolben 17 gemäß Darstellung nach unten gerichtet bewegt. Das untere Ende des zylindrischen Fortsatzes 23 legt sich an das Ventilelement 61 an und verschiebt dieses bei weiterer Bewegung nach unten gerichtet, so daß das Auslaßventil 59 schließt und das Einlaßventil 63 öffnet. Druckluft gelangt von dem an Vorratsdruckluft angeschlossenen Anschluß 9 nach Passieren des geöffneten Einlaßventils 63 in die Kammer 65, so daß sich der Rückwirkkolben 25 unter Einwirkung des eingesteuerten Druckes dem durch Steuerdruck betätigten Steuerkolben 17 nähert und sich an diesen schließlich anlegt. Ist in der Ausgangslage der Abstand zwischen der Oberseite des Rückwirkkolbens und der Unterseite des zweiten Steuerkolbens 17 größer als der Abstand zwischen dem Mitnehmerbund 35 und der Stützplatte 37, dann arbeitet das Anhängersteuerventil in normaler Weise, d.h., daß ist keinerlei Voreilung des ausgesteuerten Druckes gegenüber dem eingesteuerten Druck vorhanden.

Es wurde vorstehend erläutert, daß der Mitnehmerbund 35 relativ zu dem mit ihm verschraubten Rückwirkkolben 25 in Längsrichtung bewegbar ist, wenn mittels eines geeigneten, in das Anhängersteuerventil von unten einführbaren Werkzeuges der Schraubeinsatz 33 gedreht wird und demzufolge die Keile 29 die Mitnehmerhülse 27 verdrehen. Ist nun der eingestellte Abstand zwischen dem Mitnehmerbund 35 und der Stützplatte 37 so klein gewählt, daß sich der Mitnehmerbund 35 an die Stützplatte 37 anlegt, bevor die Oberseite des Rückwirkkolbens die Unterseite des Steuerkolbens 17 berührt hat, dann tritt im Ventilsystem die erwünschte Voreilwirkung ein. Der Mitnehmerbund 35 hebt die Stützplatte 37 vom Sicherungsring 39 ab und verschiebt sie gegen die Kraft der vorgespannten Feder 41 d.h. der Rückwirkkolben hat zunächst eine seine Rückwirkbewegung verzögernde Arbeit zu leisten, bevor er sich, in Anlage mit der Unterseite des Steuerkolbens 17 befindlich, soweit nach oben bewegen kann, bis das Einlaßventil 63 wieder schließt und am Einlaß- Auslaßventil bei abgewogenen Druckverhältnissen Gleichgewichtszustand erreicht ist. Nach Anlage des Rückwirkkolbens am Steuerkolben 17 vollzieht sich demnach ein proportionaler Druckaufbau d.h. proportional zum Steuerdruck wird ein Anhängerbremsdruck ausgesteuert, welcher entlang einer 45°-Linie verläuft. Dieser Druckverlauf entspricht folglich dem eingangs genannten proportionalen Druckaufbau, welcher dann abläuft, wenn der Abstand des Mitnehmerbundes 35 zur Stützplatte 37 größer ist als der Abstand wischen der Oberseite des Rückwirkkolbens und der Unterseite des Steuerkolbens 17. Ausgehend von einem immer konstanten Abstand zwischen der Oberseite des Rückwirkkolbens und der Unterseite des Steuerkolbens 17 (in Bremslösestellung) wird somit bei jeweils gleicher, zu überwindender Federkraft durch den Abstand des Mitnehmerbundes 35 gegenüber der Stützplatte 37 festgelegt, welche parallel verschobene Linie des ausgesteuerten Druckes besteht, also welche Voreilung der Anhänger-Bremsdruck aufweist.

Im dargestellten Ausführungsbeispiel besitzt der untere Steuerkolben 17 außerhalb des Rückwirkkolbens eine Ringfläche, welche, da in Verbindung mit der Kammer 65 befindlich, sofort durch den ausgesteuerten Druck des Anschlusses 10, also durch den Anhänger-Bremsdruck, beaufschlagt wird. Folglich unterliegt der Steuerkolben 17 bereits einer gewissen, nach oben gerichteten Reaktionskraft, zu welcher sich die Reaktionskraft des Rückwirkkolbens 25 hinzuaddiert, wenn dieser sich an die Unterseite des Steuerkolbens 17 angelegt hat. Die Erfindung ist jedoch nicht auf eine derartige Ausführungsform beschränkt d.h. das Anhängersteuerventil kann hinsichtlich der beiden Steuerkolben und des Rückwirkkolbens auch so ausgebildet sein, daß die am Außenumfang des Rückwirkkolbens befindliche Dichtung gegenüber der Innenwand des Gehäuses geführt ist, daß sich also eine Reaktionskraft auf den zweiten Steuerkolben erst dann überträgt, wenn der Rückwirkkolben am zweiten Steuerkolben anliegt und diesen unter Druckeinwirkung des Anhänger-Bremsdruckes nach oben gerichtet verschiebt.

Der zweite Steuerkolben 17 ist gegenüber dem Fortsatz 23 mit Hilfe der kardanischen Aufhängung 21 geführt, wobei die gewählte Art der Verbindung mit Hilfe der Stellschraube 49 und der Blattfeder 50 gewährleistet, daß der zweite Steuerkolben 17 relativ zum zylindrischen Fortsatz in begrenztem Maße Schwenkbewegungen vollziehen kann. Es ist aus diesem Grunde möglich, innerhalb der gegebenen Toleranz die axial ineinander geführten Kolben in vorbeschriebener Weise zu bewegen. Die kardanische Aufhängung 21 dient somit zum Ausgleich eventuell vorhandener Mittenabweichungen des zylindrischen Fortsatzes 23.

**Bezugszeichenliste**

| | |
|---|---|
| 1 | Gehäuse |
| 3 | Anschluß |
| 5 | Anschluß |
| 7 | Anschluß |
| 9 | Anschluß |
| 10 | Anschluß |
| 11 | Steuerkolben |
| 13 | Steuerkammer |
| 15 | Steuerkammer |
| 17 | Steuerkolben |
| 19 | Kanal |
| 21 | kardanische Aufhängung |
| 23 | zylindrischer Fortsatz |
| 25 | Rückwirkkolben |
| 27 | Mitnehmerhülse |
| 29 | Keil |
| 31 | Nut |
| 33 | Schraubeinsatz |
| 35 | Mitnehmerbund |
| 37 | Stützplatte |
| 39 | Sicherungsring |
| 41 | Feder |
| 43 | Steg |
| 45 | Spalt |
| 47 | Kolbenschaft |
| 49 | Stellschraube |
| 50 | Blattfeder |
| 51 | Rippe |
| 53 | Kammer |
| 55 | Kanal |
| 57 | Entlüftungsstutzen |
| 59 | Auslaßventil |
| 61 | Ventilelement |
| 63 | Einlaßventil |
| 65 | Kammer |

**Patentansprüche**

1. Anhänger-Steuerventil für druckmittelbetätigte Bremsanlagen von Nutzfahrzeugen, mit wenigstens einem durch einen Steuerdruck aktivierbaren Steuerkolben, welcher auf einen Ventilmechanismus zum Aussteuern eines Bremsdruckes nach Maßgabe des Steuerdruckes einwirkt, und mit einem Rückwirkkolben, welcher dem ausgesteuerten Bremsdruck unterliegt und entgegen der Kraft des Steuerkolbens auf den Ventilmechanismus einwirkt, wobei Federmittel vorgesehen sind, welche der Gegenkraft des Steuerkolbens zuschaltbar sind, um eine Voreilung des ausgesteuerten Druckes gegenüber dem eingesteuerten Steuerdruck zu erzielen, dadurch gekennzeichnet, daß der Rückwirkkolben (25) einen an ihm in Längsrichtung verstellbaren Mitnehmerbund (35) trägt, welcher nach Maßgabe der Reaktionsbewegung des Rückwirkkolbens gegenüber einer im Gehäuse an diesem abgestützen Feder (41) zur Anlage verfahrbar ist.

2. Anhänger-Steuerventil nach Anspruch 1, dadurch gekennzeichnet, daß sich der Steuerkolben mittels eines zylindrischen Fortsatzes (23) durch den Rückwirkkolben (25) hindurch erstreckt, daß der Rückwirkkolben (25) an seinem Innenumfang gegenüber dem Fortsatz (23) und an seinem Außenumfang vorzugsweise gegenüber dem Innenumfang des Steuerkolbens (17) abgedichtet geführt ist, daß in dem dem ausgesteuerten Bremsdruck unterliegenden Raum zwischen Innenumfang und Außenumfang des Rückwirkkolbens (25), parallel zum Fortsatz (23) sich erstreckend, eine Feder (41) unter Vorspannung zwischen gehäuseseitigen Anschlägen angeordnet ist, und daß das dem Mitnehmerbund (35) zugewandte Ende der Feder (41) an einer in Richtung des entgegengesetzten Endes verschiebbaren Stützplatte (37) abgestützt ist, welche sich nach Maßgabe der Längseinstellung des Mitnehmerbundes (35) in dessen Mitnahmeweg befindet.

3. Anhänger-Steuerventil nach Anspruch 1 oder 2 dadurch gekennzeichnet, daß der axiale Fortsatz (23) des Steuerventils (17) mittels einer kardanischen Aufhängung (21) an einem Kolbenschaft (47) des Steuerkolbens, relativ zu diesem drehbar, angebracht ist und in seinem Inneren einen durch ein eingeführtes Werkzeug betätigbaren Schraubeinsatz (33) trägt, derart, daß durch Eingriff am Schraubeinsatz (33) der Fortsatz (23) relativ zum Steuerkolben (17) drehbar ist, und daß am Außenumfang des Fortsatzes (23) Keile (29) ausgebildet sind, welche in am Innenumfang der den Mitnehmerbund tragenden Mitnehmerhülse (27) eingreifen, derart, daß die Mitnehmerhülse zusammen mit dem Fortsatz (23) drehbar, jedoch in Längsrichtung relativ zu diesem verschiebbar ist.

4. Anhänger-Steuerventil nach einem der vorangehenden Ansprüche, dadurch gekennzeichnet, daß zwischen dem Fortsatz (23) und dem Kolbenschaft (47) ein Ringspalt (45) besteht, welcher die Kammer (53) zwischen dem Steuerkolben und dem Rückwirkkolben durch den hohlen Fortssatz (23) hindurch mit der Entlüftungsverbindung des Ventilmechanismus verbindet.

5. Anhänger-Steuerventil nach einem der vorrangehenden Ansprüche, dadurch gekennzeichnet, daß der Steuerkolben (17) und der Rückwirkkolben (25) jeweils gleiche Wirkfläche besitzen.

6. Anhänger-Steuerventil nach einem der vorrangehenden Ansprüche, dadurch gekennzeichnet, daß der Steuerkolben und der Rückwirkkolben ungleiche Wirkflächen besitzen.

## Claims

1. Trailer control valve for pressure-means actuated brake installations of utility vehicles, having at least one control piston which can be activated by a control pressure, which piston acts on a valve mechanism for controlling a brake pressure in accordance with the control pressure, and having a reaction piston which is subject to the controlled brake pressure and acts against the force of the control piston on the valve mechanism, wherein spring means are provided which can be connected to the counter force of the control piston in order to achieve leading of the controlled output pressure with respect to the input control pressure, characterised in that the reaction piston (25) carries a driving collar (35) which can be adjusted on the piston in the longitudinal direction and can be moved into abutment in accordance with the reaction movement of the reaction piston with respect to a spring (41) supported in the housing on this.

2. Trailer control valve according to claim 1, characterised in that the control piston extends through the reaction piston (25) by means of a cylindrical extension (23), in that the reaction piston (25) is guided in seal-tight manner on its inner circumference with respect to the extension (23) and on its outer circumference preferably with respect to the inner circumference of the control piston (17), in that in the space between the inner circumference and the outer circumference of the reaction piston (25), which is subject to the controlled brake pressure, extending parallel to the extension (23), a spring (41) is arranged with prestress between housing-side stops and in that the end of the spring (41) facing the driving collar (35) is supported on a support plate (37) which can be moved in the direction of the opposite end, this plate being located in the take-up path of the driving collar in accordance with the longitudinal adjustment of this driving collar.

3. Trailer control valve according to claim 1 or 2, characterised in that the axial extension (23) of the control valve (17) is fitted by means of a cardan suspension (21) on a piston shaft (47) of the control piston, rotatable relatively to the latter, and in its interior carries a screw inset (33) which can be operated by an inserted tool, so that by engagement on the screw inset (33) the extension (23) is rotatable relatively to the control piston (17) and in that on the outer circumference of the extension (23) wedges (29) are formed which engage on the inner circumference of the driving sleeve (27) carrying the driving collar so that the driving sleeve is rotatable together with the extension (23) but can be moved in the longitudinal direction relatively to it.

4. Trailer control valve according to one of the preceding claims, characterised in that between the extension (23) and the piston shaft (47) there is an annular gap (45) which joins the chamber (53) between the control piston and the reaction piston through the hollow extension (23) to the ventilation connection of the valve mechanism.

5. Trailer control valve according to one of the preceding claims, characterised in that the control piston (17) and the reaction piston (25) each have the same working surface.

6. Trailer control valve according to one of the preceding claims, characterised in that the control piston and the reaction piston have unequal working surfaces.

## Revendications

1. Valve de commande de remorque pour des installations de freinage de véhicules utilitaires, actionnées par un milieu sous pression, avec au moins un piston de contrôle susceptible d'être activé par une pression de contrôle et qui agit sur un mécanisme de valve pour commander ou ajuster une pression de freinage en fonction de la pression de contrôle, et avec un piston de rétro-action qui est soumis à la pression de freinage commandée et qui agit sur le mécanisme à valve, à l'encontre du piston de contrôle, des moyens élastiques étant prévus, qui sont susceptibles d'être amenés à coagir avec la force antagoniste du piston de contrôle, en vue de l'obtention d'une avance de la pression commandée ou ajustée par rapport à la pression de commande qui a été réglée, caractérisé par le fait que le piston de rétro-action (25) porte une collerette d'entraînement (36) qui est réglable dans la direction longitudinale du piston (25), laquelle collerette est susceptible, en fonction du mouvement de réaction du piston de contre-réaction, d'être amenée en appui contre un ressort (41) qui prend appui dans le carter contre ledit piston de contre-réaction.

2. Valve de commande de remorque selon la revendication 1, caractérisé par le fait que le piston de contrôle s'étend avec un appendice cylindrique (23) à travers le piston de rétro-action (25), que le piston de rétro-action (25) est guidé avec étanchéité à sa périphérie intérieure par rapport à l'appendice (23) et à sa périphérie extérieure, de préférence, par rapport à la périphérie intérieure du piston de contrôle (17), que dans l'espace qui est soumis à la pression de freinage réglée et situé entre la périphérie intérieure et la périphérie extérieure du piston de rétroaction (25), est disposé, avec précontrainte, entre deux butées situées du côté du carter, un ressort (41) qui s'étend parallèlement à l'appendice (23), et que l'extrémité du ressort (41), située du côté de la collerette d'entraînement (35), prend appui sur une plaque d'appui (37) susceptible d'être déplacée en direction de l'extrémité opposée, laquelle plaque d'appui se situe, en fonction du réglage longitudinal de la collerette d'entraînement, dans la trajectoire d'entraînement de celle-ci.

3. Valve de commande selon la revendication 1 ou 2, caractérisé par le fait que l'appendice axial (23) de la valve de contrôle (17) est monté à l'aide d'une suspension à la cardan (21) sur une tige de piston (47) du piston de contrôle, tout en pouvant tourner par rapport à ce dernier, et il porte, intérieurement, un insert à vis (33) susceptible d'être actionné à l'aide d'un outil qui a été introduit, la réalisation étant telle que par suite d'une attaque dudit insert (33), l'appendice (23) est susceptible de subir une rotation par rapport au piston de contrôle (17), et qu'à la périphérie extérieure de l'appendice (23) sont prévus des coins (29) qui pénètrent dans la douille d'entraînement (27) qui porte à la périphérie intérieure la collerette d'entraînement, et cela de telle manière que la douille d'entraînement peut tourner avec l'appendice (23), mais est déplaçable en direction longitudinale par rapport à celui-ci.

4. Valve de commande selon l'une des revendications précédentes, caractérisée par le fait qu'entre l'appendice (23) et la tige de piston (47) est prévue une fente annulaire (45) qui relie la chambre (53) située entre le piston de contrôle et le piston de rétroaction, à travers l'appendice creux (23), avec la liaison de désaération du mécanisme de valve.

5. Valve de commande selon l'une des revendications précédentes, caractérisée par le fait que le piston de contrôle (17) et le piston de rétro-action (25) ont la même surface active.

6. Valve de commande selon l'une des revendications précédentes, caractérisée par le fait que le piston de contrôle de rétro-action ont des surfaces actives différentes.